(19) Europäisches Patentamt
European Patent Office
Office européen des brevets

(11) Veröffentlichungsnummer: **0 400 411 B1**

(12) # EUROPÄISCHE PATENTSCHRIFT

(45) Veröffentlichungstag der Patentschrift: **24.08.94**

(51) Int. Cl.$^{5}$: **C08G 65/40**

(21) Anmeldenummer: **90109398.9**

(22) Anmeldetag: **18.05.90**

(54) **Aromatische Polyethersulfone.**

(30) Priorität: **31.05.89 DE 3917648**

(43) Veröffentlichungstag der Anmeldung:
**05.12.90 Patentblatt 90/49**

(45) Bekanntmachung des Hinweises auf die Patenterteilung:
**24.08.94 Patentblatt 94/34**

(84) Benannte Vertragsstaaten:
**DE ES FR GB IT NL**

(56) Entgegenhaltungen:
**EP-A- 0 362 603**
**US-A- 3 761 449**

**Polymer Science USSR vol. 14, 1972, Seiten 2962 - 2970; S. V. VINOGRADOVA ETAL.: "Aromatic polyethers of the "cardic" type"**

(73) Patentinhaber: **BAYER AG**

**D-51368 Leverkusen (DE)**

(72) Erfinder: **Reuter, Knud, Dr.**
**Scheiblerstrasse 99**
**D-4150 Krefeld (DE)**
Erfinder: **Jilge, Wolfgang, Dr.**
**Leuchtergemark 5b**
**D-5060 Bergisch-Gladbach 2 (DE)**
Erfinder: **Pittel, Bernd, Dr.**
**Kempener Strasse 63**
**D-5138 Heinsberg (DE)**
Erfinder: **Weymans, Günther, Dr.**
**Körnerstrasse 5**
**D-5090 Leverkusen (DE)**

**EP 0 400 411 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft aromatische Polyethersulfone (und ein Verfahren zu ihrer Herstellung) auf Basis von 5 bis 90 Mol-%, bezogen auf die Gesamtmenge aller Bisphenole, Dihydroxydiphenylcycloalkanen der Formel (I)

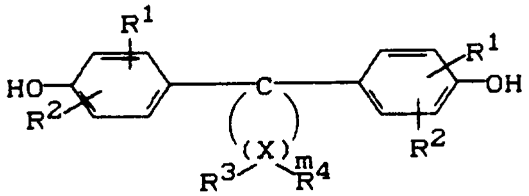

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl und $C_7$-$C_{12}$-Aralkyl, bevorzugt Phenyl-$C_1$-$C_4$-Alkyl, insbesondere Benzyl und Cumyl, |
| m | eine ganze Zahl von 4 bis 7, bevorzugt 4 oder 5 |
| $R^3$ und $R^4$ | für jedes X individuell wählbar, unabhängig voneinander Wasserstoff, oder $C_1$-$C_6$-Alkyl und Alkyl und |
| X | Kohlenstoff bedeuten, |

mit der Maßgabe, daß an mindestens einem Atom X $R^3$ und $R^4$ gleichzeitig Alkyl sind,

und 10 bis 95 Mol-% bezogen auf die Gesamtmenge aller Bisphenols Phthaleinen der Formel (II), worin $R^5$ bis $R^8$ die für $R^1$ und $R^2$ oben genannte Bedeutung haben (jedoch unabhängig von $R^1$ und $R^2$ sind).

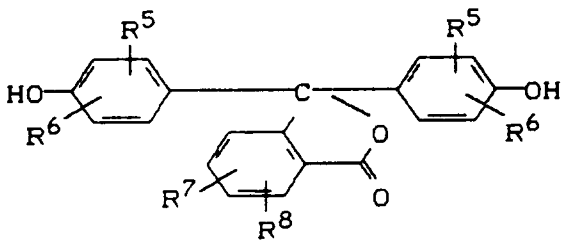

(II)

In Formel (I) sind bevorzugt an 1-2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkyl-substituiert, dagegen ist die Alkyl-di-Substitution in $\beta$-Stellung zu C-1 bevorzugt. In Formel (II) ist $R^7$ und $R^8$ bevorzugt Wasserstoff.

Besonders bevorzugt als Ausgangsmaterial gemäß Formel (I) sind Dihydroxydiphenylcycloalkane mit 5 und 6 Ring-C-Atomen im cycloaliphatischen Rest (m = 4 oder 5) in Formel (I), beispielsweise die Diphenole der Formeln

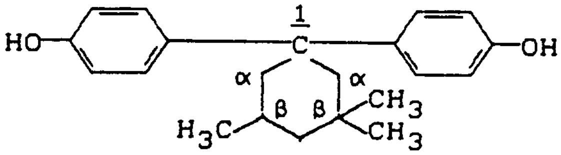

(III)

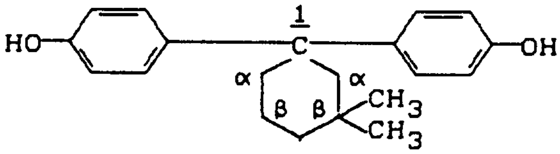

(IV) und

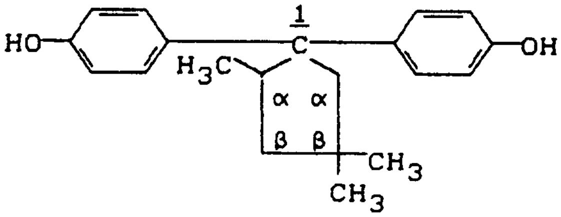

(V),

wobei das 1,1-Bis-(4-hydroxyphenyl)-3.3.5-trimethylcyclohexan (Formel III) besonders bevorzugt ist. Besonders bevorzugtes Ausgangsmaterial der Formel (II) ist Phenolphthalein ($R^5$ - $R^8$ = Wasserstoff).

Dihydroxydiphenylcycloalkane der Formel (I) können in an sich bekannter Weise durch Kondensation von Phenolen der Formel (VI)

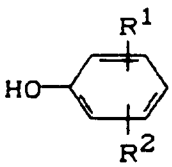

(VI)

und Ketonen der Formel (VII)

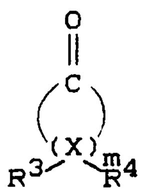

(VII)

hergestellt werden, wobei in den Formeln (VI) und (VII) X, $R^1$, $R^2$, $R^3$, $R^4$ und m die für Formel (I) angegebene Bedeutung haben.

Die Phenole der Formel (VI) sind entweder bekannt oder nach bekannten Verfahren erhältlich. (Vgl. z.B. Ullmann, Encyklopädie der technischen Chemie, 4. Auflage, Band 15, S. 61-77.)
Beispiele für geeignete Phenole der Formel (VI) sind; Phenol, o-Kresol, m-Kresol, 2,6-Dimethylphenol, 2-Chlorphenol, 3-Chlorphenol, 2,6-Dichlorphenol, 2-Cyclohexylphenol, o-Phenylphenol und o- oder p-Benzylphenol.

Die Ketone der Formel (VII) sind bekannt (siehe beispielsweise Beilsteins Handbuch der organischen Chemie, 4. Auflage, Band 7.) Ein allgemeines Verfahren zur Herstellung von Ketonen der Formel (VII) ist beispielsweise in "Organikum" 15. Auflage 1977, VEB-Deutscher Verlag der Wissenschaften, Berlin S. 698 beschrieben.

Beispiele für Ketone der Formel (VII) sind 3,3-Dimethylcyclohexanon, 4,4-Dimethylcyclohexanon, 3-Ethyl-3-methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon,3-Ethyl-4-isopropyl-3-methylcyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone der Formel (VII) sind

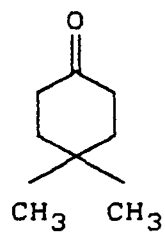

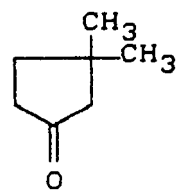

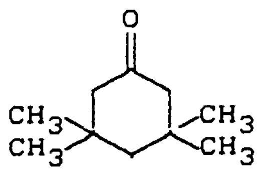

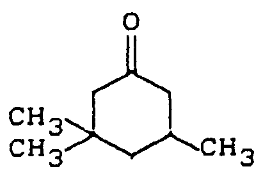

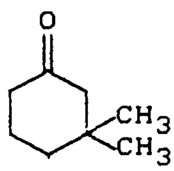

und

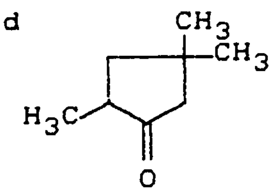

Zur Bisphenolherstellung werden im allgemeinen 2 bis 10 Mol, vorzugsweise 2,5 bis 6 Mol Phenol der Formel (VI) pro Mol Keton der Formel (VII), verwendet. Bevorzugte Reaktionszeiten sind 1 bis 100 Stunden. Im allgemeinen arbeitet man bei Temperaturen von -30 °C bis 300 °C, vorzugsweise von -15 °C bis 150 °C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid.

Die Verwendung saurer Ionenaustauscher ist ebenfalls möglich.

Weiter kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, dies ist jedoch zur Erzielung guter Umsätze dann vorteilhaft, wenn der eingesetzte Katalysator das Reaktionswasser nicht bindet.

Geeignete wasserentziehende Mittel sind beispielsweise:
Acetanhydrid, Zeolithe, Polyphosphorsäure und Phosphorpentoxid.

Die Herstellung der Diphenole entsprechend Formel (I) ist in der Deutschen Offenlegungsschrift 383 2396 beschrieben und wird durch das Beispiel 1 erläutert.

Die Phthaleine der Formel (II) sind bekannt, z.B. aus Ullmann's Encyclopädie der technischen Chemie, 3. Auflage 1957, Bd. 8, S. 766 bis 767. Sie können z.B. nach US-PS 2 522 940 oder Z. anorg. allgem. Chem. 178, S. 49 ff. (1929) hergestellt werden.
Polyethersulfone, welche Phthalein einheiten enthalten sind bekannt (Polymer Science USSR, 14, 2962 (1972).).

Geeignete Phthaleine der Formel (II) sind z.B. Phenolphthalein, die verschiedenen isomeren Kresolphthaleine, Xylenolphthaleine, Thymolphthaleine. Bevorzugt wird Phenolphthalein.

Gegenstand dieser Erfindung sind aromatische Polyethersulfone mit der wiederkehrenden Struktureinheit

-O-E-O-E'- (VIII)

worin -E'- ein zweibindiger Rest eines aromatischen Sulfons der Formel (IXa)

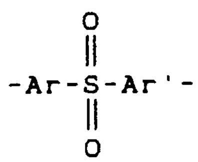

(IX a)

mit Ar und Ar' = gleiche oder verschiedene difunktionelle aromatische Reste mit 6 bis 50-C-Atomen und worin

-O-E-O- (X a)

ein zweibindiger Diphenolat-Rest ist, die dadurch gekennzeichnet sind, daß 5 Mol-% bis 90 Mol-%, vorzugsweise 20 Mol-% bis 80 Mol-% und insbesondere 30 Mol-% bis 75 Mol-% der Diphenolat-Reste der Formel (X a) solche der Formel (I a)

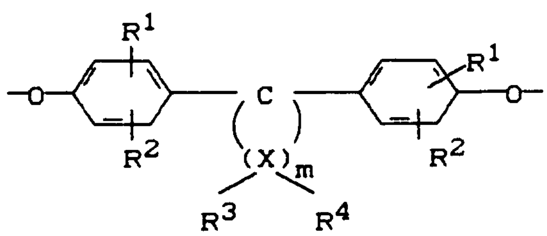

(I a)

sind, worin X, $R^1$, $R^2$, $R^3$, $R^4$ und m wie in Formel (I) definiert sind, und daß 10 bis 95 Mol-%, vorzugsweise 20 bis 80 Mol-% und insbesondere 25 bis 70 Mol-%, der Diphenolat-Reste der Formel (X a) solche der Formel (IIa)

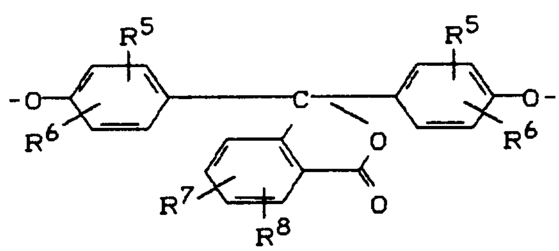

(II a)

sind, in der $R^5$ bis $R^8$ wie in Formel (II) definiert sind.

Die aromatischen Polyethersulfone der Erfindung haben bevorzugt mittlere Molekulargewichte $\overline{Mw}$ (Gewichtsmittel) von 1000 bis 500 000, insbesonders von 3 000 bis 200 000 und speziell von 5 000 bis 100 000.

Aromatische Polyethersulfone sind bekannt (siehe beispielsweise GB-PS 1 078 234, US-PS 4 010 147 und EP-OS 0 135 938). Sie können beispielsweise durch Umsetzung von Dialkalisalzen von Diphenolen mit Dihalogen-diarylsulfonen in einem polaren Lösungsmittel hergestellt werden, (siehe beispielsweise GB-PS 1 078 234), wobei die Dialkalisalze der Diphenole auch in situ erzeugt werden können.

Die erfindungsgemäßen Polyethersulfone können ebenfalls nach dieser Methode hergestellt werden, wobei als polares Lösungsmittel bevorzugt am Stickstoff $C_1$-$C_5$-alkylsubstituiertes Caprolactam, wie N-Methyl-caprolactam, N-Ethyl-caprolactam, N-n-Propyl-caprolactam, N-Isopropyl-caprolactam, vorzugsweise N-Methyl-caprolactam, und vorzugsweise am Stickstoff $C_1$-$C_5$-alkylsubstituiertePyrrolidone, wie N-Methyl-pyrrolidon; N,N-Dimethylformamid, N,N-Dimethylacetamid, Dimethylsulfoxid, Diphenylsulfon, Sulfolan oder Tetramethylharnstoff, eingesetzt werden. Es können anteilig z.B. 0,1 bis 200 Gew.-% bezogen auf das Gewicht des polaren Lösungsmittels andere weniger polare Lösungsmittel mitverwendet werden z.B. aromatische Kohlenwasserstoffe wie Toluol, Xylol, Mesitylen, Chlorbenzol, oder aliphatische Kohlenwasserstoffe wie Benzin, Cyclohexan.

Gegenstand dieser Erfindung ist auch ein Verfahren zur Herstellung der erfindungsgemäßen Polyethersulfone mit der wiederkehrenden Struktureinheit der Formel (VIII) durch Umsetzung von Dialkalidiphenolaten der Formel (Xb)

Alkali-O-E-O-Alkali (X b)

mit Dihalogen-diaryl-sulfonen der Formel (IX)

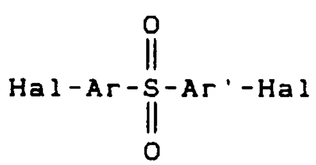

(IX)

worin Ar und Ar' gleiche oder verschiedene difunktionelle aromatische Reste mit 6 bis 50 C-Atomen und Hal Halogen, bevorzugt Fluor, Chlor und Brom bedeuten, in polaren Lösungsmitteln, das dadurch gekennzeichnet ist, daß (jeweils bezogen auf die Gesamtmenge aller eingesetzten Bisphenole) 5 bis 90 Mol-%, vorzugsweise 20 bis 80 Mol-% und insbesondere 30 bis 75 Mol-% der Dialkalidiphenolate der Formel (X b) der Formel (I b)

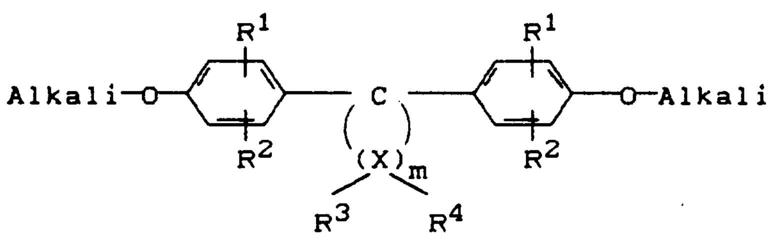

(I b)

entsprechen,
worin X, $R^1$, $R^2$,$R^3$, $R^4$ und m wie in Formel (I) definiert sind, daß 10 bis 95 Mol-%, vorzugsweise 20 bis 80 Mol-% und insbesondere 25 bis 70 Mol-% der Dialkalidiphenolate der Formel (X b) der Formel (II b)

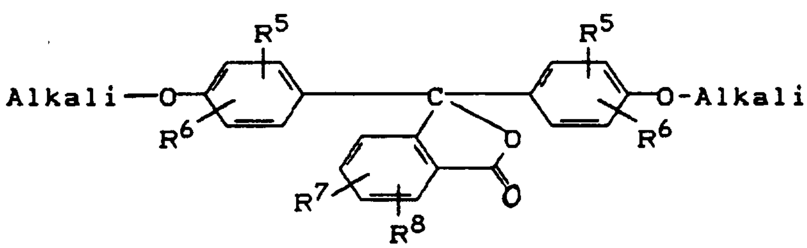

(IIb)

worin $R^5$ bis $R^8$ die für $R^1$ und $R^2$ genannte Bedeutung haben, aber unabhängig von $R^1$ und $R^2$ sind, entsprechen,
und daß die Umsetzung in polaren Lösungsmitteln wie N-alkylierten Caprolactamen oder N-alkylierten Pyrrolidonen, vorzugsweise in N-alkylierten Pyrrolidonen durchgeführt wird.

Neben den Diphenolat-Resten der Formeln I a und II a können die erfindungsgemäßen Polyethersulfone auch von anderen Diphenolen der Formel

HO - E - OH (X)

abgeleitete Diphenolat-Reste enthalten, und zwar kann deren Menge 0 bis 85 Mol-%, bevorzugt 0 bis 60 Mol-% und besonders bevorzugt 0 bis 45 Mol-% aller Diphenolat-Reste sein. (Diese Mengen ergeben sich aus den erforderlichen Minimalmengen von Diphenolat-Resten der Formeln I a und II a.)
Die Formeln (X), (X a) und (X b) stellen jeweils das Diphenol, den daraus abgeleiteten Diphenolatrest und das entsprechende Di-Alkalisalz dar.

Geeignete weitere Diphenole der Formel (X) sind z.B. Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole (X) sind z.B. in den US-PS 3 028 365, 2 999 835, 3 148 172, 3 275 601, 2 991 273, 3 271 367, 3 062 781, 2 970 131 und 2 999 846, in den DE-OS 1 570 703, 2 063 050, 2 063 052, 2 211 0956, der FR-PS 1 561 518 und in der Monographie "H. Schnell, Chemistry and Physics of Polycarbonates, Interscience Publishers, New York 1964", beschrieben.

Bevorzugte andere Diphenole (X) sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4'-Dihydroxydiphenylsulfon.

Besonders bevorzugte andere Diphenole sind beispielsweise;
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan und
4,4'-Dihydroxydiphenylsulfon.

Sie können einzeln oder im Gemisch eingesetzt werden.

Geeignete Dihalogendiarylsulfone (IX) sind z.B.
4,4'-Dichlordiphenylsulfon,
4,4'-Difluordiphenylsulfon,

4-Chlor-4'-fluordiphenylsulfon,
3,3'-Dinitro-4,4'-dichlordiphenylsulfon,
3,3'-Dinitro-4,4'-difluordiphenylsulfon,
4,4'-Dibromdiphenylsulfon,

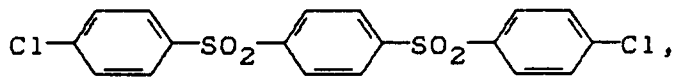

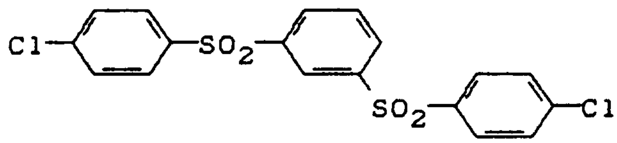

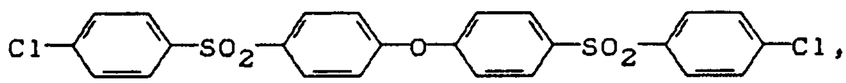

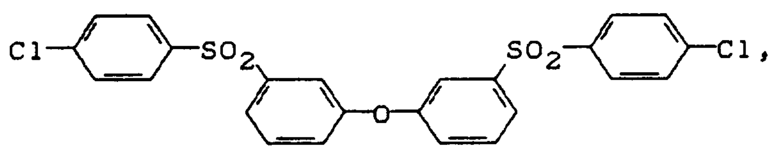

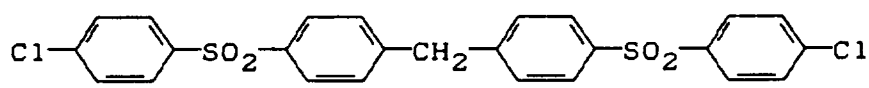

Bevorzugt sind demnach in Formel (IX)
Ar und Ar' p-Phenylenreste oder mit Alkyl oder Nitrogruppen substituierte p-Phenylenreste oder Reste der Formel

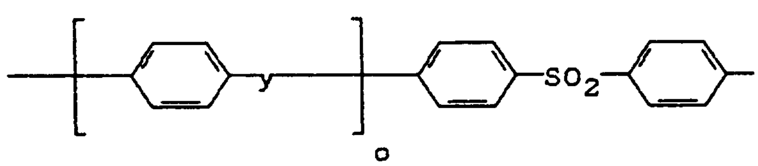

mit y = -O-, $-CH_2-$, $-SO_2-$, Einfachbindung und o = 0 oder 1,
und Hal = Fluor, Chlor oder Brom.

Als Alkali in den Dialkaliphenolaten (I b), (II b) und (X b) dient vorzugsweise Natrium und Kalium.

Als Halogen in den Dihalogendiarylsulfonen(IX) dient vorzugsweise Chlor und Fluor, insbesondere Chlor.

Bevorzugte, erfindungsgemäße Polyethersulfone sind solche, die mindestens 10 Mol-% der wiederkehrenden Einheit

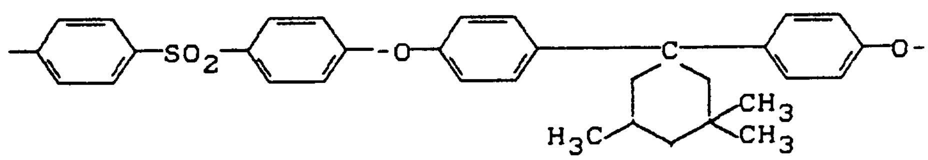

und mindestens 10 Mol-% wiederkehrende Struktureinheiten der Formel

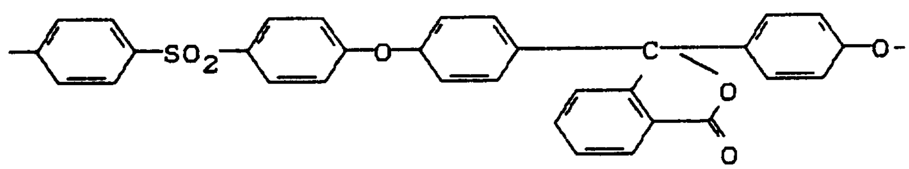

enthalten und ein Molekulargewicht $\overline{M}w$ (Gewichtsmittel) von über 3000 g/mol aufweisen.

Erfindungsgemäß können die aromatischen Polyethersulfone bei Temperaturen von 130 °C bis 320 °C, bevorzugt 145 °C bis 280 °C und bei Drucken von 0,8 bis 10 bar, vorzugsweise 1 bis 3 bar, insbesondere bei atmosphärischem Umgebungsdruck hergestellt werden.

Das molare Mengenverhältnis der Alkalidiphenolate (I b), (II b) und (X b) zu den Dihalogen-diarylsulfonen (IX) ist 0,67 bis 2, bevorzugt 0,8 bis 1,2, besonders bevorzugt 0,95 bis 1,05, wobei für hohe Molekulargewichte ein Verhältnis von 1 oder nahe bei 1 gewählt werden muß.

Die Menge an polaren Lösungsmitteln beträgt 0,5 bis 50, bevorzugt 2 bis 20 Gewichtsteile bezogen auf das Gesamtgewicht der Polyethersulfonbildungskomponenten.

Die erfindungsgemäßen Polyethersulfone können wie folgt aus den erhaltenen Reaktionsgemischen gewonnen werden:
Man verdünnt das Reaktionsgemisch, insbesondere wenn sehr hochviskose Lösungen vorliegen, z.B. mit dem polaren Reaktions-Lösemittel oder einem anderen Lösungsmittel für das Polyethersulfon, und filtriert. Nach Neutralisation des Filtrats mit einer geeigneten Säure, z.B. Essigsäure, wird das Polyethersulfon durch Eingießen in ein geeignetes Fällungsmedium, z.B. Wasser, Alkohole (wie z.B. Methanol, Isopropanol) oder Wasser-Alkohol-Gemische, z.B. $H_2O$/Methanol 1:1, ausgefällt, isoliert und anschließend getrocknet.

Die erfindungsgemäßen Polyethersulfone sind thermoplastische Kunststoffe mit hoher Wärmeformbeständigkeit bei ausgezeichneter Gaspermeabilität und vorzüglicher Flammfestigkeit.

Sie können beispielsweise verarbeitet werden durch Extrusion, Spritzgießen, Sintern oder Verpressen.

Es können beliebige Formkörper hergestellt werden. Diese sind überall dort einsetzbar, wo Polyethersulfone hoher Formstabilität gefordert sind, also beispielsweise auf dem Gebiet der Elektrotechnik und Elektronik, z.B. für Leiterplatten, Fahrzeugbau incl. Luft- und Raumfahrt, für Sportgeräte, Funktionsteile und Geschirr für Mikrowellenherde, sterilisierbare medizinische Geräte, Kaffeemaschinenteile, Eierkocher, Heißwasserbehälter, -leitungen und -pumpen, Haartrockner und ähnliches mehr. Besonders geeignet sind die erfindungsgemäßen Polyethersulfone jedoch für Folien und Membranen, für die bei guter Flammfestigkeit und hoher thermischer und mechanischer Stabilität eine gute Gaspermeabilität gefordert wird.

Den erfindungsgemäßen Polyethersulfone können noch übliche Additive wie Weichmacher, Entformungsmittel, Stabilisatoren wie z.B. UV-Absorber oder Antioxidantien, Intumeszenzhilfsmittel (Flammschutzmittel), Verstärkungsfasern wie Glasfasern, Kohlenstoffasern oder Aramidfasern, Füllstoffe, anorganische und organische Pigmente, keramische Grundstoffe, Ruß etc. zugesetzt werden, bevorzugt in Mengen von 0 bis 80, besonders bevorzugt 0 bis 60 Gew.-%, bezogen auf Polyethersulfon = 100%, zweckmäßig vor der Verarbeitung der erfindungsgemäßen Polyethersulfone zu Formkörpern.

Die niedermolekularen erfindungsgemäßen Polyethersulfone eignen sich aufgrund ihrer funktionellen Endgruppen (Halogen bzw. OH) besonders zum Einbau in Blockcopolymere in Verbindung mit anderen cokondensierbaren Bausteinen.

Die erfindungsgemäßen Polyethersulfone können auch mit anderen bekannten Polymeren in an sich bekannter Weise abgemischt werden.

In den folgenden Beispielen wurde die Permeationseigenschaft wie folgt gemessen:
Der Durchgang eines Gases durch eine dichte Polymermembran wird durch einen Lösungs-Diffusionsvorgang beschrieben. Die kennzeichnende Konstante für diesen Prozeß ist der Permeationskoeffizient P, der angibt, welches Gasvolumen V bei gegebener Druckdifferenz ΔP in einer bestimmten Zeit t durch eine Folie bekannter Fläche F und Dicke d hindurchtritt. Für den stationären Zustand läßt sich aus den Differentialgleichungen des Permeationsvorgangs ableiten:

$$P = \frac{V \cdot d}{F \cdot t \cdot \Delta P}$$

Zusätzlich ist die Permeation abhängig von der Temperatur und dem Wassergehalt des Gases.

Die Meßanordnung besteht aus einem thermostatisierten Zwei-Kammer-System. Die eine Kammer ist für die Aufnahme des Vorgabegases und die andere für die Aufnahme des Permeates ausgelegt. Die Kammern sind durch die zu untersuchende Polymermembran getrennt.

Beide Kammern werden auf 0,001 mbar evakuiert und die Vorgabekammer dann mit Gas gefüllt. Das permeierte Gas bewirkt dann in der Permeatkammer (bei konstantem Volumen) einen Druckanstieg, der mit einem Druckaufnehmer, z.B. Baratron der Firma MKS, in Abhängigkeit von der Zeit bis zum stationären Zustand registriert wird. Hieraus wird V bei Normtemperatur nach der o. a. Formel errechnet, t ist bekannt. Die vorgegebene Druckdifferenz unter Berücksichtigung des äußeren Luftdruckes wird jeweils auf 10.000 Pa eingestellt. Die Membranfläche F ist bekannt. Die Membrandicke d wird mittels Mikrometerschraube als Mittel aus 10 unabhängigen, über die Membranfläche verteilten Dickenmessungen ermittelt.

Aus diesen Größen ist der Permeationskoeffizient P zu bestimmen in der Dimension

$$[P] = \left[ \frac{cm^3 \cdot mm}{m^2 \cdot 24h \cdot 10.000\ Pa} \right]$$

wobei auf eine Membrandicke von 1 mm bezogen ist. Weitere Meßparameter sind:

| | |
|---|---|
| Temperatur: | 25 °C (Genauigkeit 1 °C) |
| rel. Gasfeuchte: | 0 % |

Zu einer qualitativen Beschreibung des Meßvorgangs vergleiche auch EP-A 0 242 147, Beispiel 1 (S. 15).

Beispiele:

1. Herstellung eines Bisphenols der Formel (I)

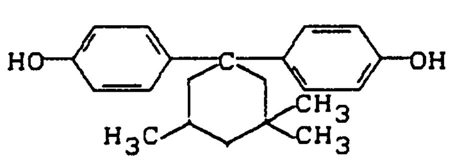

(A)

In einem 1-Liter-Rundkolben mit Rührer, Tropftrichter, Thermometer, Rückflußkühler und Gaseinleitungsrohr werden 7,5 Mol (705 g) Phenol und 0,15 Mol (30,3 g) Dodecanthiol bei 28 bis 30 °C mit trockenem HCl-Gas gesättigt. Zu dieser Lösung werden bei 28 bis 30 °C innerhalb 3 Stunden eine Mischung von 1,5 Mol Dihydroisophoron (210 g) und 1,5 Mol (151 g) Phenol zugetropft, wobei weiterhin HCl-Gas durch die Reaktionslösung geleitet wird. Nach beendeter Zugabe wird weitere 5 Stunden HCl-Gas eingeleitet. Zur Vervollständigung der Reaktion läßt man 8 Stunden bei Zimmertemperatur stehen. Anschließend

wird überschüssiges Phenol durch Wasserdampf-Destillation entfernt. Der verbleibende Rückstand wird zweimal mit je 500 ml Petrolether (60-90) und einmal mit 500 ml Methylenchlorid heiß extrahiert und abfiltriert. Ausbeute: 370 g, entspricht 79 %. Schmelzpunkt: 205-207 °C

2. Herstellung eines erfindungsgemäßen Copolyethersulfons aus 40 Mol-% Phenolphthalein und 60 Mol-% des Bisphenols der Formel (A)

In einer mit Stickstoff gespülten Rührapparatur, die mit einem Wasserabscheider versehen ist, werden 18,62 g (0,06 Mol) des Bisphenols der Formel (A), 12,73 g (0,04 Mol) Phenolphthalein, 28,73 g 4,4'-Dichlordiphenylsulfon (0,1 Mol), 200 ml N-Methylpyrrolidon, 100 ml Toluol und 18 g Kaliumcarbonat vorgelegt. Es wird destillativ azeotrop entwässert, bis der Ansatz wasserfrei ist. Durch Abdestillieren von Toluol wird die Sumpftemperatur innerhalb einer Stunde auf 180 °C erhöht. Der Ansatz wird 4 Stunden bei 180 °C gerührt und anschließend 1 Stunde lang auf 190 - 195 °C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1 : 1) daraus isoliert. Zur weiteren Reinigung wird das Polymer in Methylenchlorid gelöst und anschließend in Methanol gefällt. Abschließend wird 14 Stunden bei 120 °C im Vakuum getrocknet.

Ausbeute: 37,0 g; relative Viskosität ($\eta_{rel}$) gemessen in Methylenchlorid bei 25 °C und einer Polymerkonzentration von 5 g pro Liter: 1,198; Glastemperatur, bestimmt mit Hilfe der DSC-Methode bei einer Aufheizgeschwindigkeit von 20 K/min: 247 °C.

| Permeationskoeffizienten P gegenüber | $N_2$ | $O_2$ | $CO_2$ |
|---|---|---|---|
| Beispiel 2 | 142 | 963 | 6116 |
| Vergleich * | | 330 | 860 |

* Vergleich: Polyethersulfon aus Phenolphthalein und 4,4'-Dichlordiphenylsulfon, $\eta_{rel}$ = 1,354.

3. Herstellung eines erfindungsgemäßen Copolyethersulfons aus 90 Mol-% Phenolphthalein und 10 Mol-% des Bisphenols der Formel (A)

Entsprechend Beispiel 2 werden 3,10 g (0,01 Mol) des Bisphenols der Formel (A), 28,64 g (0,09 Mol) Phenolphthalein und 28,72 g (0,1 Mol) 4,4'-Dichlordiphenylsulfon zum Polyethersulfon umgesetzt und analog aufgearbeitet. Ausbeute: 36,2 g, relative Viskosität, gemessen in Methylenchlorid bei 25 °C und einer Polymerkonzentration von 5 g pro Liter: 1,262, Glastemperatur, bestimmt mit Hilfe der DSC-Methode bei einer Aufheizgeschwindigkeit von 20 K/min: 254 °C

| Permeationskoeffizienten P gegenüber | $N_2$ | $O_2$ | $CO_2$ |
|---|---|---|---|
| Beispiel 3 | 110 | 707 | 4390 |
| Vergleich* | | 330 | 860 |

* Vergleich: Polyethersulfon aus Phenolphthalein und 4,4'-Dichlordiphenylsulfon, $\eta_{rel}$ = 1,354.

4. Herstellung eines erfindungsgemäßen Copolyethersulfons aus 50 Mol-% Phenolphthalein und 50 Mol-% des Bisphenols der Formel (A)

In einer mit Stickstoff gespülten Rührapparatur, die mit einem Wasserabscheider versehen ist, werden 294,9 g (0,95 Mol) des Bisphenols der Formel (A), 302,4 g (0,95 Mol) Phenolphthalein, 545,6 g 4,4'-Dichlordiphenylsulfon (1,9 Mol), 3800 ml N-Methylcaprolactam, 1900 ml Toluol und 342 g Kaliumcarbonat vorgelegt. Es wird destillativ azeotrop entwässert, bis der Ansatz wasserfrei ist. Durch Abdestillieren von Toluol wird die Sumpftemperatur innerhalb einer Stunde auf 180 °C erhöht. Der Ansatz wird 4 Stunden bei 180 °C gerührt und anschließend in 5 Stunden auf 230-235 °C aufgeheizt. Danach wird mit 2500 ml N-Methylcaprolactam verdünnt und heiß abgesaugt. Das Filtrat wird mit Essigsäure neutralisiert und das Polymer durch Fällung in einer Methanol-Wasser-Mischung (1:1) daraus isoliert. Zur weiteren Reinigung wird das Polymer in Methylenchlorid gelöst und anschließend in Methanol gefällt. Abschließend wird 14 Stunden bei 120 °C im Vakuum getrocknet.

Ausbeute: 794,3 g; relative Viskosität ($\eta_{rel}$) gemessen in Methylenchlorid bei 25 °C und einer Polymerkonzentration von 5 g pro Liter; 1,18; Glastemperataur, bestimmt mit Hilfe des DSC-Methode bei einer Aufheizgeschwindigkeit von 20 K/min: 249 °C.

5. Herstellung eines erfindungsgemäßen Copolyethersulfons aus 80 Mol-% Phenolphthalein, 10 Mol-% des Bisphenols der Formel (A) und 10 Mol-% Bisphenol A.

Entsprechend Beispiel 2 werden 2,28 g Bisphenol A, 3,10 g (0,01 Mol) des Bisphenols der Formel (A), 25,46 g (0,08 Mol) Phenolphthalein und 28,72 g (0,1 Mol) 4,4'-Dichlordiphenylsulfon zum Polyethersulfon umgesetzt und analog aufgearbeitet. Ausbeute: 35,1 g, relative Viskosität, gemessen in Methylenchlorid bei 25 °C und einer Polymerkonzentration von 5 g pro Liter: 1,26, Glastemperatur, bestimmt mit Hilfe der DSC-Methode bei einer Aufheizgeschwindigkeit von 20 K/min: 250 °C.

## Patentansprüche

**1.** Aromatische Polyethersulfone mit der wiederkehrenden Struktureinheit

-O-E-O-E'- (VIII)

worin -E'- ein zweibindiger Rest eines aromatischen Sulfons der Formel (IX a) ist,

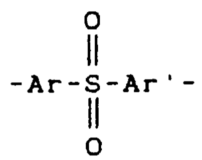 (IX a)

mit -Ar- und -Ar'- als gleichen oder verschiedenen difunktionellen aromatischen Resten mit 6 bis 50 C-Atomen,
und worin -O-E-O- (X a) ein zweibindiger Diphenolat-Rest ist,
dadurch gekennzeichnet, daß 5 Mol-% bis 90 Mol-% der Diphenolat-Reste der Formel (X a) solche der Formel (I a) sind

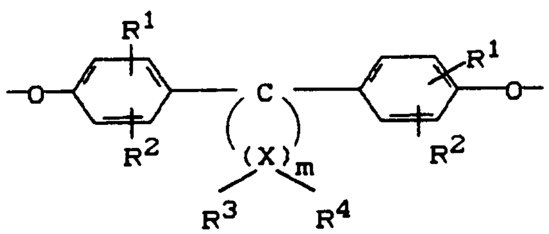 (I a),

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{20}$-Aryl und $C_7$-$C_{12}$-Aralkyl, |
| m | eine ganze Zahl von 4 bis 7, |
| $R^3$ und $R^4$ | für jedes X individuell wählbar, unabhängig voneinander Wasserstoff oder $C_1$-$C_6$-Alkyl, und |
| X | Kohlenstoff bedeuten, mit der Maßgabe, daß an mindestens einem Atom X $R^3$ und $R^4$ gleichzeitig Alkyl bedeuten, |

10 bis 95 Mol-% der Diphenolat-Reste der Formel (Xa) solche der Formel (II a) sind, in denen $R^5$, $R^6$, $R^7$ und $R^8$ wie $R^1$ und $R^2$ definiert, jedoch unabhängig von $R^1$ und $R^2$ sind,

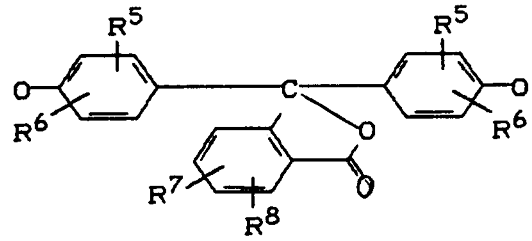 (II a)

und 0 bis 85 Mol-% der Diphenolat-Reste der Formel (Xa) von anderen Diphenolen abgeleitet sind.

2. Aromatische Polyethersulfone gemäß Anspruch 1, mit mittleren Molekulargewichten $\overline{M}w$ von 1.000 bis 500.000 g/ml.

3. Aromatische Polyethersulfone gemäß Anspruch 1, in denen 20 Mol-% bis 80 Mol-% der Diphenolat-Reste der Formel (X a) Diphenolat-Reste der Formel (I a), 20 Mol-% bis 80 Mol-% der Diphenolat-Reste der Formel (X a) Diphenolat-Reste der Formel (II a) sind, und 0 bis 60 Mol-% der Diphenolat-Reste der Formel (Xa) von anderen Diphenolen abgeleitet sind.

4. Aromatische Polyethersulfone gemäß Anspruch 1, in denen 30 Mol-% bis 75 Mol-% der Diphenolat-Reste der Formel (X a) Diphenolat-Reste der Formel (I a), 25 Mol-% bis 70 Mol-% der Diphenolat-Reste der Formel (X a) Diphenolat-Reste der Formel (II a) sind, und 0 bis 45 Mol-% der Diphenolat-Reste der Formel (Xa) von anderen Diphenolen abgeleitet sind.

5. Verfahren zur Herstellung der Polyethersulfone des Anspruchs 1 durch Umsetzung von Dialkalidiphenolaten der Formel (X b) Alkali-O-ϵ-O-Alkali (Xb) mit Dihalogen-diaryl-Sulfonen der Formel (IX)

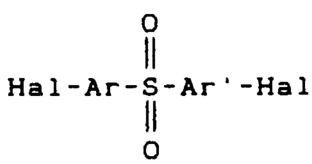 (IX),

worin -Ar- und -Ar'- gleiche oder verschiedene difunktionelle aromatische Reste mit 6 bis 50 C-Atomen und Hal Halogen bedeuten, dadurch gekennzeichnet, daß 5 Mol-% bis 90 Mol-% der Dialkalidiphenolate der Formel (X b) solche der Formel (Ib)

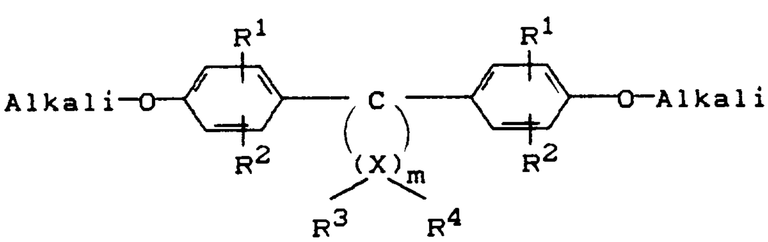 (I b)

sind, worin X, $R^1$, $R^2$, $R^3$, $R^4$ und m die für die Formel I a in Anspruch 1 genannte Bedeutung haben, 10 bis 95 Mol-% der Dialkalidiphenolate der Formel (X b) der Formel (II b)

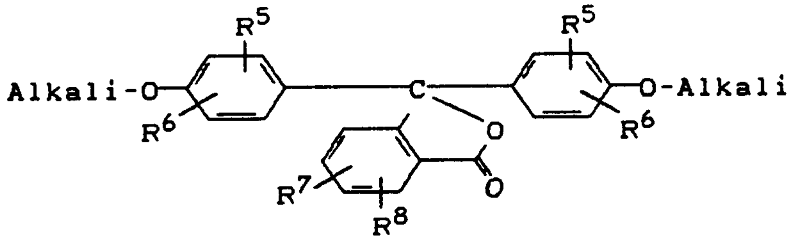

(II b)

entsprechen, wobei $R^5$ bis $R^8$ die für $R^1$ und $R^2$ genannte Bedeutung haben, aber unabhängig von $R^1$ und $R^2$ sind, und daß die Umsetzung in polaren Lösungsmitteln durchgeführt wird, und 0 bis 85 Mol-% der Diphenolat-Reste der Formel (Xa) von anderen Diphenolen abgeleitet sind.

**6.** Verwendung von Gemischen von Diphenolen der Formeln (I) und (II)

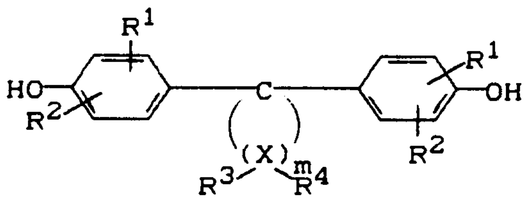

(I),

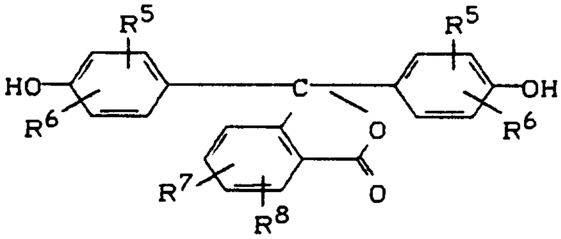

(II)

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl, |
| m | eine ganze Zahl von 4 bis 7, |
| $R^3$ und $R^4$ | für jedes X individuell wählbar, unabhängig voneinander Wasserstoff oder $C_1$-$C_6$-Alkyl, und |
| X | Kohlenstoff bedeuten, mit der Maßgabe, daß an mindestens einem Atom X $R^3$ und $R^4$ gleichzeitig Alkyl bedeuten, |

und $R^5$, $R^6$, $R^7$ und $R^8$ wie $R^1$ und $R^2$ definiert, aber unabhängig von $R^1$ und $R^2$ sind, im Molverhältnis Diphenole (I) : Diphenole (II) von 1 : 19 bis 9 : 1 zur Herstellung von aromatischen Polyethersulfonen.

## Claims

**1.** Aromatic polyether sulfones containing the following recurring structural unit:

-O-E-O-E'- (VIII)

in which -E'- is a two-bond group of an aromatic ketone corresponding to formula (IXa)

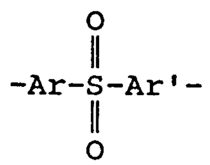

(IXa)

in which

Ar and Ar' may be the same or different and represent difunctional aromatic radicals containing from 6 to 50 carbon atoms

and in which

-O-E-O- (Xa)

is a two-bond diphenolate residue,
characterized in that 5 to 90 mol-% of the diphenolate residues of formula (Xa) are those corresponding to formula (Ia)

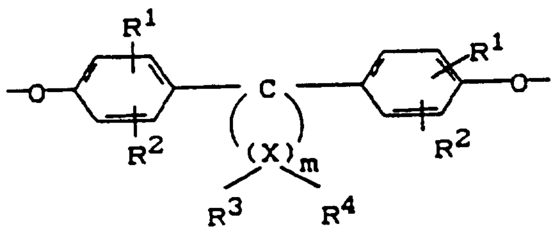

(I a),

in which

$R^1$ and $R^2$ independently of one another represent hydrogen, halogen, $C_{1-8}$ alkyl, $C_{5-6}$ cycloalkyl, $C_{6-20}$ aryl and $C_{7-12}$ aralkyl,

m is an integer of from 4 to 7,

$R^3$ and $R^4$ may be individually selected for each X and independently of one another represent hydrogen or $C_{1-6}$ alkyl and

X represents carbon,

with the proviso that, at at least one atom X, both $R^3$ and $R^4$ are alkyl,

10 to 95 mol-% of the diphenolate residues of formula (Xa) are those corresponding to formula (IIa)

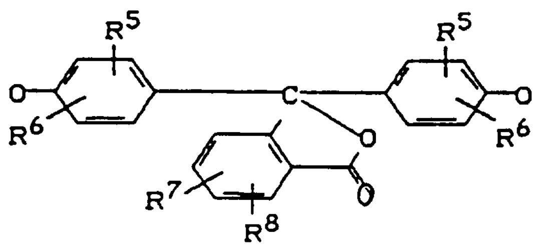

(II a)

in which $R^5$, $R^6$, $R^7$ and $R^8$ have the same meanings as $R^1$ and $R^2$, but are independent of $R^1$ and $R^2$, and 0 to 85 mol-% of the diphenolate residues (Xa) are derived from other diphenols.

**2.** Aromatic polyether sulfones as claimed in claim 1 having average molecular weights Mw in the from from 1,000 to 500,000 g/ml.

**3.** Aromatic polyether sulfones as claimed in claim 1, in which 20 mol-% to 80 mol-% of the diphenolate residues of formula (Xa) are diphenolate residues of formula (Ia), 20 mol-% to 80 mol-% of the diphenolate residues of formula (Xa) are diphenolate residues corresponding to formula (IIa) and 0 to 60 mol-% of the diphenolate residues of formula (Xa) are derived from other diphenols.

**4.** Aromatic polyether sulfones as claimed in claim 1, in which 30 mol-% to 75 mol-% of the diphenolate residues of formula (Xa) are diphenolate residues of formula (Ia), 25 mol-% to 70 mol-% of the diphenolate residues of formula (Xa) are diphenolate residues corresponding to formula (IIa) and 0 to 45 mol-% of the diphenolate residues are derived from other diphenols.

**5.** A process for the production of the polyether sulfones claimed in claim 1 by reaction of dialkali diphenolates of formula (Xb) alkali-O-ε-O-alkali (Xb) with dihalodiaryl sulfones corresponding to formula (IX):

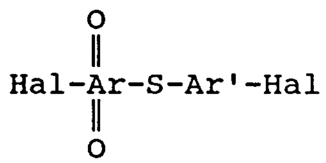

(IX)

in which Ar and Ar' may be the same or different and represent difunctional aromatic radicals containing from 6 to 50 carbon atoms and Hal represents halogen,
characterized in that 5 to 90 mol-% of the dialkali diphenolates of formula (Xb) are those corresponding to formula (Ib):

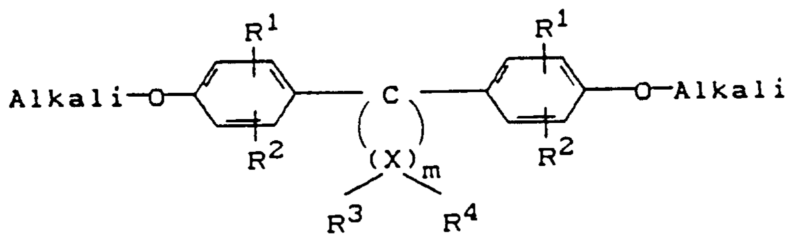

(I b)

in which X, $R^1$, $R^2$, $R^3$, $R^4$ and m are as defined for formula (Ia) in claim 1,
10 to 95 mol-% of the dialkali phenolates of formula (Xb) are those corresponding to formula (IIb):

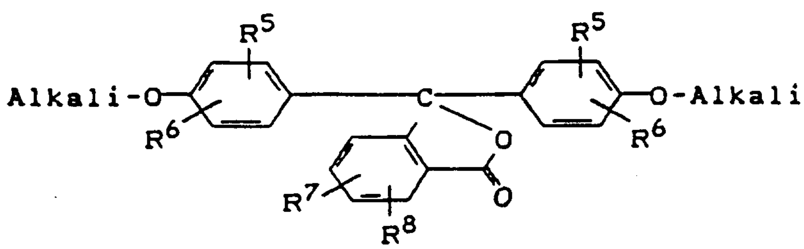

(II b)

in which $R^5$ to $R^8$ have the meanings defined for $R^1$ and $R^2$ but are independent of $R^1$ and $R^2$,
and in that the reaction is carried out in polar solvents and 0 to 85 mol-% of the diphenolate residues of formula (Xa) are derived from other diphenols.

**6.** The use of mixtures of diphenols corresponding to formulae (I) and (II)

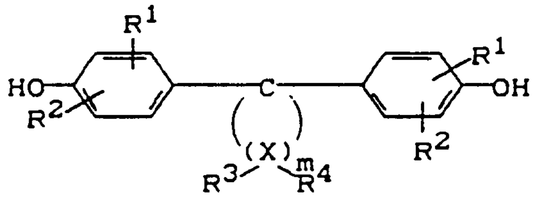

(I),

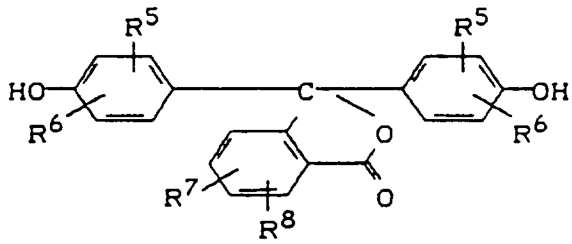

(II)

in which

| | |
|---|---|
| $R^1$ and $R^2$ | independently of one another represent hydrogen, halogen, $C_{1-8}$ alkyl, $C_{5-6}$ cycloalkyl, $C_{6-10}$ aryl and $C_{7-12}$ aralkyl, |
| m | is an integer of from 4 to 7, |
| $R^3$ and $R^4$ | may be individually selected for each X and independently of one another represent hydrogen or $C_{1-6}$ alkyl and |
| X | represents carbon, |
| | with the proviso that, at at least one atom X, both $R^3$ and $R^4$ are alkyl, |

and $R^5$, $R^6$, $R^7$ and $R^8$ have the same meanings as $R^1$ and $R^2$, but are independent of $R^1$ and $R^2$, in a molar ratio of diphenols (I) to diphenols (II) of from 1:19 to 9:1 for the production of aromatic polyether sulfones.

## Revendications

**1.** Polyéther-sulfones aromatiques à motifs de structure répétés

-O-E-O-E'- (VIII)

dans lesquels -E'- représente un radical divalent d'une sulfone aromatique de formule IXa

$$-Ar-\overset{\overset{O}{\|}}{\underset{\underset{O}{\|}}{S}}-Ar'- \qquad (IXa)$$

dans laquelle Ar et Ar', ayant des significations identiques ou différentes, représentent chacun un radical aromatique difonctionnel en $C_6$-$C_{50}$, et

-O-E-O- (Xa)

représente en radical divalent de diphénolate,
caractérisées en ce que 5 mol % à 90 mol % des radicaux de diphénolates de formule Xa répondent à la formule Ia

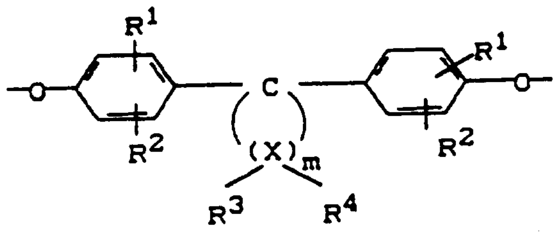

(I a),

dans laquelle

- $R^1$ et $R^2$ représentent chacun, indépendamment l'un de l'autre, l'hydrogène, un halogène, un groupe alkyle en $C_1$-$C_8$, cyclolkyle en $C_5$-$C_6$, aryle en $C_6$-$C_{20}$ ou aralkyle en $C_7$-$C_{12}$,
- m est un nombre entier allant de 4 à 7,
- $R^3$ et $R^4$, qui peuvent être choisis séparément pour chaque atome X, représentent chacun, indépendamment l'un de l'autre, l'hydrogène ou un groupe alkyle en $C_1$-$C_6$, et
- X représente le carbone,

sous réserve que, sur un au moins des atomes X, $R^3$ et $R^4$ représentent tous deux des groupes alkyle, 10 à 95 mol % des radicaux de diphénolates de formule Xa répondent à la formule IIa

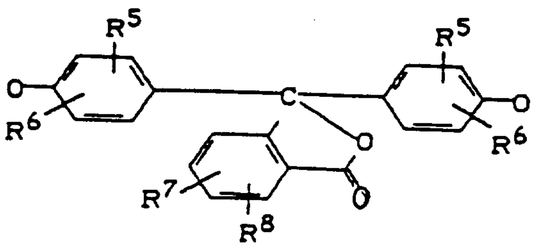

(II a)

dans laquelle $R^5$, $R^6$, $R^7$ et $R^8$ ont les significations indiquées pour $R^1$ et $R^2$, mais sont indépendants de $R^1$ et $R^2$,
et 0 à 85 mol % des radicaux de diphénolates de formule Xa dérivent d'autres diphénols.

**2.** Polyéther-sulfones aromatiques selon la revendication 1, ayant des poids moléculaires moyens $\overline{M}_w$ de 1000 à 500 000.

**3.** Polyéther-sulfones aromatiques selon la revendication 1, dans lesquelles 20 mol % à 80 mol % des radicaux de diphénolates de formule Xa sont des radicaux de diphénolates de formule Ia, 20 mol % à 80 mol % des radicaux de diphénolates de formule Xa sont des radicaux de diphénolates de formule IIa et 0 à 60 mol % des radicaux de diphénolates de formule Xa dérivent d'autres diphénols.

**4.** Polyéther-sulfones aromatiques selon la revendication 1, dans lesquelles 30 mol % à 75 mol % des radicaux de diphénolates de formule Xa sont des radicaux de diphénolates de formule Ia, 25 mol % à 70 mol % des radicaux de diphénolates de formule Xa sont des radicaux de diphénolates de formule IIa et 0 à 45 mol % des radicaux de diphénolates de formule Xa dérivent d'autres diphénols.

**5.** Procédé de préparation des polyéther-sulfones de la revendication 1, par réaction de diphénolates dialcalins de formule Xb : alcali-O-E-O-alcali (Xb) avec des dihalogénodiarylsufones de fomule IX.

$$\text{Hal-Ar-}\overset{\overset{\displaystyle O}{\|}}{\underset{\underset{\displaystyle O}{\|}}{S}}\text{-Ar'-Hal} \qquad \text{(IX),}$$

dans laquelle Ar et Ar', ayant des significations identiques ou différentes, représentent chacun un radical aromatique difonctionnel en $C_6$-$C_{50}$ et Hal représente un halogène, caractérisé en ce que 5 mol

% à 90 mol % des diphénolates dialcalins de formule Xb répondent à la formule Ib.

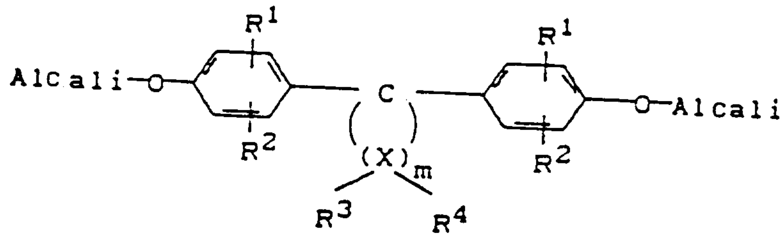

(I b)

dans laquelle X, $R^1$, $R^2$, $R^3$, $R^4$ et m ont les significations indiquées en référence à la formule Ia dans la revendication 1, 10 à 95 mol % des diphénolates dialcalins de formule Xb répondent à la formule IIb.

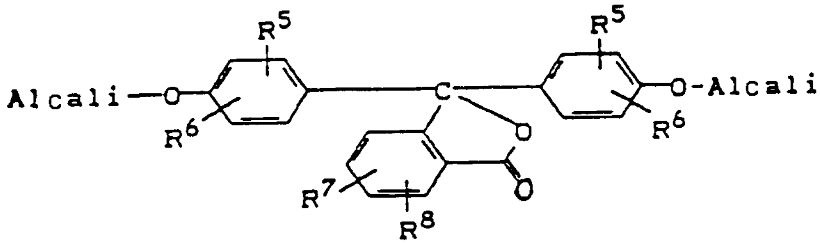

(IIb)

dans laquelle $R^5$ à $R^8$ ont les significations indiquées pour $R^1$ et $R^2$, mais sont indépendants de $R^1$ et $R^2$, et en ce que la réaction est effectuée dans des solvants polaires, et en ce que 0 à 85 mol % des radicaux de diphénolates de formule Xa dérivent d'autres diphénols.

**6.** Utilisation des mélanges de diphénols de formules I et II

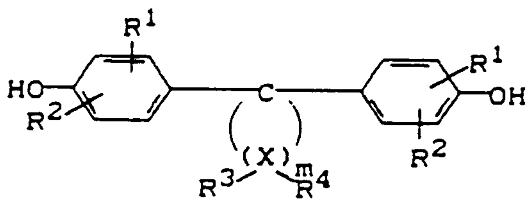

(I),

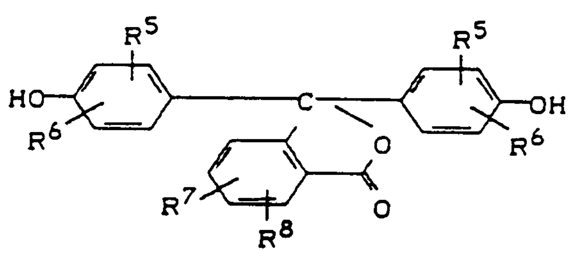

(II)

dans lesquelles

| | |
|---|---|
| $R^1$ et $R^2$ | représentent chacun, indépendamment l'un de l'autre, l'hydrogène, un halogène, un groupe alkyle en $C_1$-$C_8$, cycloalkyle en $C_5$-$C_6$, aryle en $C_6$-$C_{10}$ ou aralkyle en $C_7$-$C_{12}$, |
| m | est nombre entier allant de 4 à 7, |
| $R^3$ et $R^4$ | peuvent être choisis séparément pour chacun des atomes X et représentent chacun, indépendamment l'un de l'autre, l'hydrogène ou un groupe alkyle en $C_1$-$C_6$, et |
| X | représente le carbone, |

sous réserve que, sur au moins un atome X, $R^3$ et $R^4$ représentent tous deux des groupes alkyle,

et $R^5$, $R^6$, $R^7$ et $R^8$ ont les significations indiquées pour $R^1$ et $R^2$ mais sont indépendants de $R^1$ et $R^2$, à des proportions molaires diphénols I/diphénols II de 1:19 à 9:1, pour la préparation de polyéther-sulfones aromatiques.